Europäisches Patentamt

European Patent Office

Office européen des brevets

(11) Publication number: **0 392 262 B1**

# EUROPEAN PATENT SPECIFICATION

(45) Date of publication of patent specification: **30.11.94**  (51) Int. Cl.⁵: **C08K  9/04**, C08K 3/04,
   C08L 83/07

(21) Application number: **90105924.6**

(22) Date of filing: **28.03.90**

(54) Silicone rubber composition.

(30) Priority: **29.03.89 JP 77747/89**

(43) Date of publication of application:
   **17.10.90 Bulletin  90/42**

(45) Publication of the grant of the patent:
   **30.11.94 Bulletin  94/48**

(84) Designated Contracting States:
   **BE DE FR GB**

(56) References cited:
   **EP-A- 0 005 455      EP-A- 0 106 363**
   **EP-A- 0 348 561      BE-A- 557 114**
   **US-A- 2 982 755      US-A- 3 972 850**
   **US-A- 4 020 014**

(73) Proprietor: **Dow Corning Toray Silicone Company Ltd.**
   **3-16, Nihombashi-muromachi 2-chome,**
   **Chuo-ku**
   **Tokyo 103 (JP)**

(72) Inventor: **Higuchi, Kazuo**
   **6,1-chome,**
   **Yushudai Nishi**
   **Ichihara-shi, Chiba (JP)**
   Inventor: **Nakamura, Akito**
   **6,1-chome,**
   **Yushudai Nishi**
   **Ichihara-shi, Chiba (JP)**

(74) Representative: **Spott, Gottfried, Dr.**
   **Patentanwälte Spott und Puschmann**
   **Sendlinger-Tor-Platz 11**
   **D-80336 München (DE)**

Rank Xerox (UK) Business Services
(3. 10/3.0 9/3.3.3)

**Description**

It is known that a carbon black-containing silicone rubber composition is electrically conductive. For volume resistivities in the conduction range below $10^3$ ohm-cm, this composition can provide silicone rubber moldings with narrowly disperse, stable volume resistivity values. However, large variations in the volume resistivity occur for volume resistivities in the conduction range above $10^4$ ohm-cm, and particularly in the range of $10^4$ to $10^{10}$ ohm-cm, and this composition cannot provide silicone rubber moldings with stable, narrowly disperse volume resistivity values. Silicone rubber compositions prepared by admixing surfactant are also known. However, problems arise with these compositions after curing such as a tendency for the surfactant to bleed out onto the surface of the silicone rubber molding, the occurrence of time-dependent variations in the value of the volume resistivity, and so forth. Thus, such compositions cannot perform satisfactorily as conductive silicone rubber compositions.

A silicone rubber composition comprising an alkenyl containing polydiorganosiloxane, a surfactant-treated inorganic filler, carbon black, and curing agent yields a silicone rubber composition which can provide silicone rubber moldings which after curing have stable volume resistivity values and a narrow dispersion or scatter in their volume resistivity values.

The present invention relates to a silicone rubber composition comprising (a) 100 weight parts organopolysiloxane having in each molecule at least 2 units as represented by the following general formula:

$$R_aR'_bSiO_{(4-a-b)/2}$$

wherein R is a monovalent hydrocarbon group which lacks aliphatically unsaturated bonds, R' is an alkenyl group, a is zero to 2, b is 1 to 2, and a + b is 1 to 3), (b) 5 to 200 weight parts of an inorganic filler selected from microparticulate silica such as dry-method silica, wet-method silica, fused silica, quartz powder, diatomaceous earth, and alumina, the surface of which has been treated with 0,05 to 10 weight parts surfactant per 100 weight parts inorganic filler, (c) 5 to 50 weight parts carbon black, and (d) curing agent in a quantity sufficient to cure the instant composition.

The silicone rubber composition of the present invention, because it consists of components (a) through (d) and particularly because it contains the surface-treated inorganic filler (b), characteristically can provide silicone rubber moldings which present little dispersion or scatter in their post-cure volume resistivity values and which have stable volume resistivity values.

To explain this in greater detail, the component (a) used by the present invention comprises organopolysiloxane which contains at least two alkenyl group-containing siloxane units in each molecule. This component (a) is the basic or principal component of the composition of the present invention. R in the aforementioned formula is a monovalent hydrocarbon group free of aliphatically unsaturated groups, and is exemplified by alkyl and substituted alkyl groups such as methyl, ethyl, propyl, and 3,3,3-trifluoropropyl; and by aryl and substituted aryl groups such as phenyl and tolyl. R' is an alkenyl group as exemplified by vinyl, allyl, and propenyl.

The organopolysiloxane comprising this component may also contain small quantities of the hydroxyl group and alkoxy groups such as methoxy, ethoxy, propoxy, and methoxyethoxy. R' may be bonded at the molecular terminals or as a side chain or at both positions. The molecular structure may be straight chain, branched chain, cyclic, or network. The viscosity is not critical, and organopolysiloxane can be used ranging from organopolysiloxane with a viscosity of 100 centipoise at 25 degrees Centigrade to organopolysiloxanes having a high degree of polymerization known as silicone gums.

The inorganic filler in the component (b) used by the present invention is the component which distinguishes the present invention, and it functions to stabilize the volume resistivity of the composition of the present invention.

The surfactant in component (b) may be a cationic surfactant as exemplified by alkylammonium salts such as cocoalkyltrimethylammonium chloride, cetyltrimethylammonium chloride, stearyltrimethylammonium chloride, beef tallow alkyltrimethylammonium chloride, and octyltrimethylammonium chloride; and by alkylbenzylammonium salts such as stearyldimethylbenzylammonium chloride; an anionic surfactant as exemplified by alkyl sulfates such as ammonium lauryl sulfate, by the salts of sulfates of polyoxyethylene alkyl ethers such as ammonium polyoxyethylene lauryl ether sulfate, by N-acylmethyltaurine salts such as sodium N-cocoylmethyltaurine, and by alkyl sulfocarboxylic acid salts, alkyl phosphates, and polyoxyethylene alkyl ether phosphates; or a nonionic surfactant as exemplified by sorbitan fatty acid esters, glycerol fatty acid esters, decaglycerol fatty acid esters, polyglycerol fatty acid esters, propylene glycol/pentaerythritol fatty acid esters, polyoxyethylene sorbitan fatty acid esters, polyoxyethylene sorbit fatty acid esters, polyoxyethylene glycerol fatty acid esters, polyethylene glycol fatty acid esters, polyoxyethylene alkyl ethers, polyoxyethylene/polyoxypropylene alkyl ethers, polyoxyethylene alkylphenyl ethers, polyoxyethylene castor oil/hardened castor oil, and polyoxyethylene alkylamine/fatty acid amide.

The inorganic filler of component (b) is selected from microparticulate silica such as dry-method (fume) silica, wet-method (precipitated) silica, fused silica, quartz powder, diatomaceous earth, and alumina. The dry-method and wet-method silica preferably have a surface area greater than 50 m$^2$/g.

While this component generally comprises inorganic filler treated with surfactant as described above, inorganic filler treated with cationic surfactant is preferred.

Various methods may be used to prepare this component. For example, the inorganic filler and surfactant are first mixed to homogeneity followed by heating at a temperature below the surfactant's decomposition temperature. In another method, the filler is mixed with an aqueous solution of the surfactant, and this mixture is then dried with heating or at ambient temperature in order to remove the water. The quantity of surfactant for treatment for this component corresponds to 0.05 to 10 weight parts surfactant per 100 weight parts inorganic filler. The volume resistivity's stability is only poorly improved when below 0.05 weight parts is used, while the curability of the composition of the present invention is reduced when in excess of 10 weight parts is used.

The carbon black comprising the component (c) used in the present invention is the component which imparts electrical conductivity to the composition of the present invention. No particular restriction applies in this regard, and those generally used to equip silicone rubbers with electrical conductivity may be employed. Examples of such carbon blacks are acetylene blacks, Ketjen blacks, furnace blacks, and thermal blacks. Among these, those with an oil absorption of 150 to 50 are preferred.

The curing agent comprising component (d) is the component which functions to cure the composition of the present invention, and this is generally an organoperoxide. The organoperoxides used to cure silicone rubber are well known in the art. Alternatively, use may be made of the combination of organohydrogenpolysiloxane and a platinum-type compound. The organoperoxide is exemplified by dicumyl peroxide, di-t-butyl peroxide, t-butyl cumyl peroxide, 2,5-dimethyl-2,5-di(t-butylperoxy)hexane, 1,1-bis(t-butylperoxy)-3,3,5-trimethylcyclohexane, benzoyl peroxide, 2,4-dichlorobenzoyl peroxide, and p-chlorobenzoyl peroxide.

The organohydrogenpolysiloxane comprises organohydrogenpolysiloxane as represented by the following general formula

$$R_cH_dSiO_{(4-c-d)/2}$$

wherein R is the same as above, c is zero to 3, d is 1 to 3, and c + d is 1 to 3. Its molecular structure may be any of straight chain, branched chain, cyclic, and network. While its degree of polymerization is not critical, as a general rule organohydrogenpolysiloxane is used with a viscosity at 25 degrees Centigrade within the range of 23 to 10,000 centistokes.

Examples of the platinum-type compound are microparticulate platinum, microparticulate platinum adsorbed on a carbon powder support, chloroplatinic acid, alcohol-modified chloroplatinic acid, chelate compounds of platinum, and chloroplatinic acid/olefin coordination compounds.

This component is added in a quantity sufficient to cure the composition of the present invention.

The composition of the present invention is obtained by mixing and kneading the aforementioned components (a) through (d) in the specified quantities using, for example, a two-roll mill, kneader, or Banbury mixer. Furthermore, as long as the object of the present invention is not compromised, the various additives known to the art may be admixed, for example, heat stabilizers such as titanium oxide, iron oxide red, cerium oxide, and barium zirconate; flame retardants such as halogen compounds and antimony oxide; and physical property modifiers such as carbon-functional silanes and organohydrogenpolysiloxanes.

The present invention will be explained in greater detail by the following illustrative examples, in which parts equals weight parts and the viscosity is the value at 25 degrees Centigrade.

Example 1

100 Parts water was mixed with 10 parts wet-method silica having a BET specific surface area of 130 m2/g and 10 parts stearyltrimethylammonium chloride (brand name: 2450, from Nikko Chemicals Kabushiki Kaisha). The obtained mixture was sprayed into a spray drier maintained at 200 degrees Centigrade and dried to give a cationic surfactant-treated wet-method silica. The following were then mixed to homogeneity on a two-roll mill to give a silicone rubber base: 100 parts dimethylpolysiloxane gum (average degree of polymerization of 3,000, and having 99.84 mole percent dimethylsiloxane units and 0.16 mole percent methylvinylsiloxane units), 20 parts of the above cationic surfactant-treated wet-method silica, and 20 parts

3

furnace black having an oil absorption of 80 mL/100 g (DBP). A silicone rubber composition was obtained by the addition with mixing to homogeneity of 1.5 parts 2,5-dimethyl-2,5-bis(t-butylperoxy)hexane to 100 parts of this silicone rubber base. This composition was then press-molded at 170 degrees Centigrade and 25 kg/cm2 for 10 minutes to give ten sheet moldings (thickness = 1 mm). These moldings were placed in a hot-air circulation oven maintained at 200 degrees Centigrade, where they were held for 4 hours.

The volume resistivity of the obtained moldings was measured according to JIS C-2123, and the obtained results are reported in Table 1.

For comparison, a silicone rubber composition was prepared as above, but using the wet-method silica in place of the cationic surfactant-treated wet-method silica. The volume resistivity of this composition was also measured, and these results are reported in Table 1 as Comparison Example 1.

Also, a silicone rubber composition was prepared as above, but without using the aforementioned cationic surfactant-treated wet-method silica. The volume resistivity of this composition was measured, and these results are also reported in Table 1 as Comparison Example 2.

Table 1

| Measurement Value | Present Invention | Comparison Example 1 | Comparison Example 2 |
|---|---|---|---|
| volume resistivity values (ohm-cm) | $2 \times 10^{10}$ | $0.7 \times 10^{15}$ | $2 \times 10^{14}$ |
| | $2 \times 10^{10}$ | $0.8 \times 10^{15}$ | $2 \times 10^{14}$ |
| | $2 \times 10^{10}$ | $0.8 \times 10^{15}$ | $2 \times 10^{14}$ |
| | $3 \times 10^{10}$ | $1 \times 10^{15}$ | $3 \times 10^{14}$ |
| | $3 \times 10^{10}$ | $1 \times 10^{15}$ | $3 \times 10^{14}$ |
| | $4 \times 10^{10}$ | $2 \times 10^{15}$ | $4 \times 10^{14}$ |
| | $4 \times 10^{10}$ | $2 \times 10^{15}$ | $5 \times 10^{14}$ |
| | $5 \times 10^{10}$ | $3 \times 10^{15}$ | $5 \times 10^{14}$ |
| | $6 \times 10^{10}$ | $3 \times 10^{15}$ | $6 \times 10^{14}$ |
| | $8 \times 10^{10}$ | $3 \times 10^{15}$ | $6 \times 10^{14}$ |
| range of volume resistivity values (ohm-cm) | $2 \times 10^{10}$ to $8 \times 10^{10}$ | $0.7 \times 10^{15}$ to $3 \times 10^{15}$ | $2 \times 10^{14}$ to $6 \times 10^{14}$ |

It can be understood from these results that the silicone rubber composition of the present invention, after curing, presents only a narrow dispersion or scatter in the volume resistivity values and that these values are remarkably stable.

Example 2

A silicone rubber base was prepared by mixing the following to homogeneity on a three-roll mill: 100 parts dimethylsiloxane copolymer having dimethylvinylsiloxane at both terminals (viscosity equal to 10,000 centistokes); 10 parts acetylene black; and 20 parts cationic surfactant-treated wet-method silica as used in Example 1. A silicone rubber composition was then obtained by mixing to homogeneity 100 parts of this silicone rubber base; 15 ppm as platinum of a complex of chloroplatinic acid and tetramethyldivinyldisiloxane as the curing catalyst; and 1.2 parts trimethylsiloxy-terminated dimethylsiloxane-methylhydrogensiloxane copolymer (silicon-bonded hydrogen atom content equal to 0.8 weight percent, viscosity equal to 5 centistokes). This composition was cured by compression molding in a press at 25 kg/cm2 and 170 degrees Centigrade for 10 minutes to prepare five 2 mm-thick sheets. The volume resistivity of these sheets was measured according to JIS-C-2123. In addition, the sheets were then heat-treated for 7 days in a hot-air circulation oven maintained at 150 degrees Centigrade, and the volume resistivity was again measured on the obtained silicone rubber sheets.

For comparison, a silicone rubber composition was prepared as above, but using 10 parts of the wet-method silica as used in Example 1 plus 10 parts of the cationic surfactant as used in Example 1, in place of the 20 parts cationic surfactant-treated wet-method silica. The volume resistivity was measured as above, and these results are reported in Table 2.

Table 2

| Measurement Value | Present Invention | Comparison Example |
|---|---|---|
| volume resistivity values of the sheets after press molding (ohm-cm) | $0.7 \times 10^8$<br>$0.8 \times 10^8$<br>$1 \times 10^8$<br>$1 \times 10^8$<br>$1 \times 10^8$ | $1 \times 10^8$<br>$5 \times 10^8$<br>$7 \times 10^8$<br>$7 \times 10^8$<br>$8 \times 10^8$ |
| volume resistivity of the sheets after heat treatment for 7 days at 150 degrees Centigrade (ohm-cm) | $1 \times 10^8$<br>$1 \times 10^8$<br>$1 \times 10^8$<br>$2 \times 10^8$<br>$2 \times 10^8$ | $5 \times 10^{10}$<br>$7 \times 10^{10}$<br>$1 \times 10^{12}$<br>$1 \times 10^{12}$<br>$3 \times 10^{12}$ |

**Claims**

1. Silicone rubber composition comprising

(a) 100 weight parts organopolysiloxane having in each molecule at least 2 units as represented by the following general formula:

$$R_aR'_bSiO_{(4-a-b)/2}$$

wherein R is a monovalent hydrocarbon group which lacks aliphatically unsaturated bonds, R' is an alkenyl group, a is zero to 2, b is 1 to 2, and a + b is 1 to 3,

(b) 5 to 200 weight parts of an inorganic filler selected from microparticulate silica such as dry-method silica, wet-method silica, fused silica, quartz powder, diatomaceous earth, and alumina, the surface of which has been treated with 0,05 to 10 weight parts surfactant 100 weight parts inorganic filler,

(c) 5 to 50 weight parts carbon black, and

(d) curing agent in a quantity sufficient to cure the instant composition.

2. Silicone rubber composition of Claim 1 in which the surfactant-treated inorganic filler comprises microparticulate silica treated with cationic surfactant.

3. Silicone rubber composition of Claim 2 in which the microparticulate silica is wet-method silica having a surface area of greater than 50 m$^2$/g which is treated with alkylammonium salt.

4. Silicone rubber composition of Claim 3 in which the carbon black is selected from the group consisting of furnace black and acetylene black.

**Patentansprüche**

1. Silikonkautschukzusammensetzung, umfassend

(a) 100 Gew.-Teile eines Organopolysiloxans mit mindestens zwei Einheiten mit der folgenden allgemeinen Formel

$$R_aR'_bSiO_{(4-a-b)/2} \,,$$

worin R eine monovalente Kohlenwasserstoffgruppe ist, die keine aliphatisch ungesättigten Bindungen aufweist, R' eine Alkenylgruppe ist, a 0 bis 2 ist, b 1 bis 2 ist und a + b 1 bis 3 ist, in jedem Molekül,

(b) 5 bis 200 Gew.-Teile eines anorganischen Füllstoffs ausgewählt aus mikroteilchenförmigem Siliciumdioxid, zum Beispiel mit Trockenverfahren hergestelltem Siliciumdioxid, mit Naßverfahren hergestelltem Siliciumdioxid, geschmolzenem Siliciumdioxid, Quarzpulver, Diatomeenerde und Aluminiumoxid, deren Oberfläche mit 0,05 bis 10 Gew.-Teilen Tensid pro 100 Gew.-Teilen anorganischem Füllstoff behandelt wurde,

(c) 5 bis 50 Gew.-Teile Ruß und

(d) ein Härtungsmittel in einer Menge, die ausreicht, um die vorliegende Zusammensetzung zu härten.

2. Silikonkautschukzusammensetzung nach Anspruch 1, worin der mit Tensid behandelte anorganische Füllstoff mikroteilchenförmiges Siliciumdioxid, das mit einem kationischen Tensid behandelt wurde, umfaßt.

3. Silikonkautschukzusammensetzung nach Anspruch 2, worin das mikroteilchenförmige Siliciumdioxid mit Naßverfahren hergestelltes Siliciumdioxid mit einer Oberfläche von mehr als 50 m$^2$/g ist, die mit Alkylammoniumsalz behandelt wurde.

4. Silikonkautschukzusammensetzung nach Anspruch 3, worin der Ruß ausgewählt ist aus der Gruppe bestehend aus Ofenruß und Acetylenruß.

**Revendications**

1. Composition de caoutchouc de silicone comprenant

(a) 100 parties en poids d'organopolysiloxane dont chaque molécule contient au moins 2 motifs tels que représentés par la formule générale suivante :

$R_aR'_bSiO_{(4-a-b)/2}$

où R est un groupe hydrocarboné monovalent qui est dépourvu de liaisons aliphatiquement insaturées, R' est un groupe alcényle, a est de 0 à 2, b est de 1 à 2, et a + b est de 1 à 3,
(b) 5 à 200 parties en poids d'une charge minérale choisie parmi une silice microparticulaire telle qu'une silice préparée par voie sèche, une silice préparée par voie humide, la silice fondue, la poudre de quartz, la terre de diatomées et l'alumine, dont la surface a été traitée avec 0,05 à 10 parties en poids d'agent tensio-actif par 100 parties en poids de charge minérale,
(c) 5 à 50 parties en poids de noir de carbone, et
(d) un agent durcisseur en une quantité suffisante pour durcir la présente composition.

2. Composition de caoutchouc de silicone de la revendication 1, dans laquelle la charge minérale traitée par un agent tensio-actif consiste en silice microparticulaire traitée par un agent tensio-actif cationique.

3. Composition de caoutchouc de silicone de la revendication 2, dans laquelle la silice microparticulaire est une silice préparée par voie humide ayant une surface spécifique supérieure à 50 $m^2/g$ qui est traitée par un sel d'alkylammonium.

4. Composition de caoutchouc de silicone de la revendication 3, dans laquelle le noir de carbone est choisi dans le groupe formé par le noir au four et le noir d'acétylène.